# EUROPÄISCHE PATENTSCHRIFT

(11) **EP 0 949 070 B1**
(45) Veröffentlichungstag und Bekanntmachung des Hinweises auf die Patenterteilung: **26.06.2002**
(21) Anmeldenummer: 99104117.9
(22) Anmeldetag: 02.03.1999
(51) Int. Cl.: B41F 13/20

(54) **Lagerung für einen Zylinder in einer Druckmaschine**
Bearing for a cylinder in a printing machine
Palier pour un cylindre dans une machine d'impression

(30) Priorität: 11.04.1998 DE 19816256
(43) Veröffentlichungstag der Anmeldung: 13.10.1999
(73) Patentinhaber: INA Wälzlager Schaeffler oHG, 91072 Herzogenaurach (DE)
(72) Erfinder: Lunz, Erich, 91475 Lonnerstadt (DE); Kölbl, Bernd, 91413 Neustadt/Aisch (DE)

(56) Entgegenhaltungen:
- EP-A- 0 788 879
- DE-A- 4 302 149
- DE-A- 4 401 344
- DE-C- 667 033

## Beschreibung

### Gebiet der Erfindung

Die Erfindung betrifft eine Lagerung für einen Zylinder in einer Druckmaschine, wie Plattenzylinder, der über einen Hebel von einem ortsfest angeordneten elektrischen Stellmotor in axialer Richtung verstellbar ist.

### Hintergrund der Erfindung

Zur Verstellung von Maschinenbauteilen sind aus dem Dokument EP 0 492 102 A1 bei einer Lagerung für einen Druckwerkzylinder hydraulisch oder pneumatisch wirkende Arbeitszylinder bekannt, mit welchen Hebel bewegt werden. Hier besteht also der Nachteil, daß eine hydraulische oder pneumatische Steuerung erforderlich ist.

Eine aus dem Dokument DE 43 02 149 A1 bekannte Lagerung der eingangs genannten Art enthält einen als Gabelbrücke ausgebildeten Hebel, der an seinem einen Ende mit einem Bolzen an einem festen Lagerkörper verschwenkbar gelagert ist. An seinem anderen Ende weist der Hebel eine Stützrolle auf. Diese kann über eine Druckplatte und ein Stirnlager axial auf einen Zylinder für dessen Verstellung einwirken. Hierfür ist an dem Lagerkörper ein elektrischer Stellmotor ortsfest angeordnet, mit dem eine Verschwenkung des Hebels über Stirnräder und eine Stellschraube durchgeführt werden kann.

Das Dokument DE 44 01 344 A1 offenbart eine Lagerung für einen Formzylinder und einen Übertragungszylinder eines Druckwerks für Rotationsdruckmaschinen. Bei dieser Lagerung sind zwei einander entsprechende Achszapfen der Zylinder durch ein Querjoch miteinander verbunden. An dem Querjoch greift eine Stellspindel an, die mit einem Elektromotor einen Verschiebetrieb bildet und eine axiale Verschiebung der Zylinder bewirkt.

Aus dem Dokument EP 0 788 879 A1 ist ebenfalls eine Lagerung für einen Zylinder bekannt, der von einem an einem Gestell befestigten Motor axial verstellt werden kann. Dabei bewegt der Motor eine Gabel, die auf einen Flansch der Zylinderwelle einwirkt. Die Gabel ist mit einem Kugellager an einer in dem Gestell befestigten Welle längsverschieblich gelagert und wird von dem Motor über einen Riementrieb und einen Schraubtrieb angetrieben.

### Zusammenfassung der Erfindung

Der Erfindung liegt die Aufgabe zugrunde, eine weitere Anordnung für einen axial verstellbaren Zylinder in einer Druckmaschine zu schaffen, welche es ermöglicht, auf hydraulische oder pneumatische Arbeitszylinder gänzlich zu verzichten.

Diese Aufgabe wird erfindungsgemäß dadurch gelöst, dass der Hebel an dem Zylinder, von diesem radial abstehend, angeschraubt ist.

Auf diese Weise können die Bewegungen des Hebels zur Axialverschiebung des Zylinders reine Linearbewegungen sein.

Während der Hebel an dem Zylinder, welchen er axial verschieben soll, angeschraubt ist, kann der Stellmotor über eine Konsole an einer Gehäusewand eines Maschinengestells befestigt, beispielsweise angeschraubt sein.

Der Zylinder kann an seinen beiden Enden mit jeweils einem die axiale Verstellung nicht behindernden Exzenterlager in Gehäusewänden des Maschinengestells drehbar gelagert sein.

Die Läuferwelle des Stellmotors kann abtriebsseitig als Gewindespindel eines Wälzschraubtriebes ausgeführt sein, dessen Gewindemutter an einem auf den Hebel des Zylinders einwirkenden Laufwagen einer Linearführung angeordnet ist. Dabei kann der Wälzschraubtrieb als Rollengewindetrieb ausgebildet sein.

Die Linearführung kann als Laufrollenführung mit einer Führungsschiene und vier an dem Laufwagen gelagerten, längs der Führungsschiene abrollbaren Laufrollen ausgebildet sein.

An dem Führungswagen können in Längsrichtung der Führungsschiene in einem Abstand hintereinander zwei Stützrollen gelagert sein, wobei ein kreisbogenförmiger Flanschbereich des Hebels des Zylinders in dem Abstand zwischen den Stützrollen spielfrei eingeklemmt sein kann.

### Kurze Beschreibung der Zeichnung

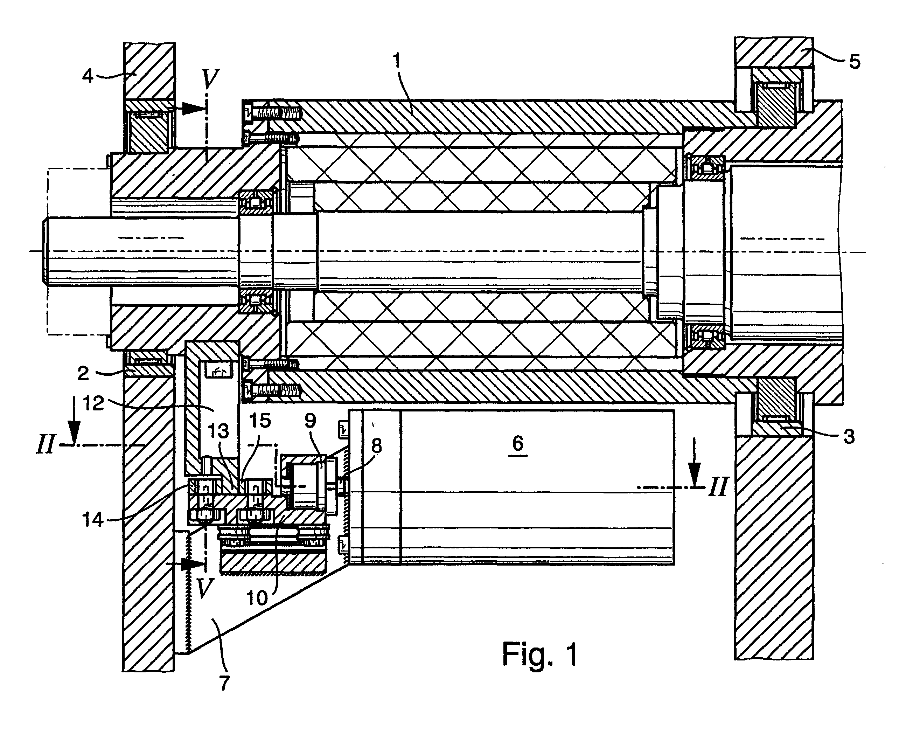

Ein Ausführungsbeispiel der Erfindung ist in der Zeichnung dargestellt und wird im folgenden näher beschrieben. Es zeigen
- Figur 1: einen in einem Maschinengestell drehbar gelagerten, von einem Stellmotor axial verschiebbaren Zylinder im Längsschnitt;

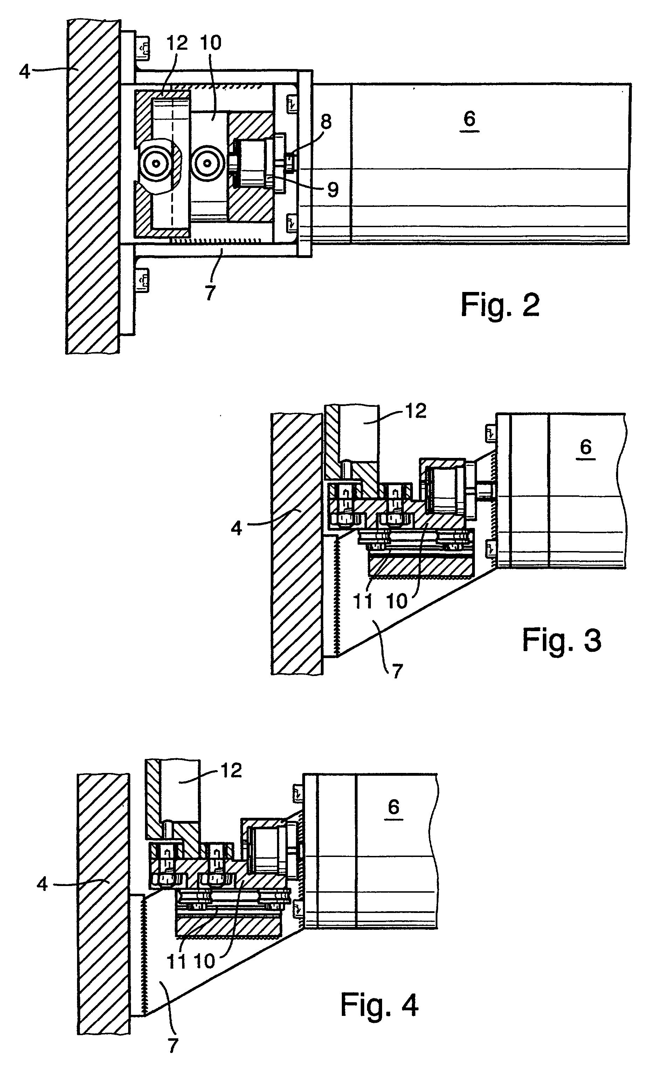

- Figur 2: den Schnitt gemäß Linie II-II der Figur 1;
- Figur 3: den Bereich der Figur 1, welcher die Vorrichtung zur Axialverstellung enthält, in der zur benachbarten Gehäusewand nahen Endposition;
- Figur 4: den Bereich der Figur 1, welcher die Vorrichtung zur Axialverstellung enthält, in der zur benachbarten Gehäusewand fernen Endposition;

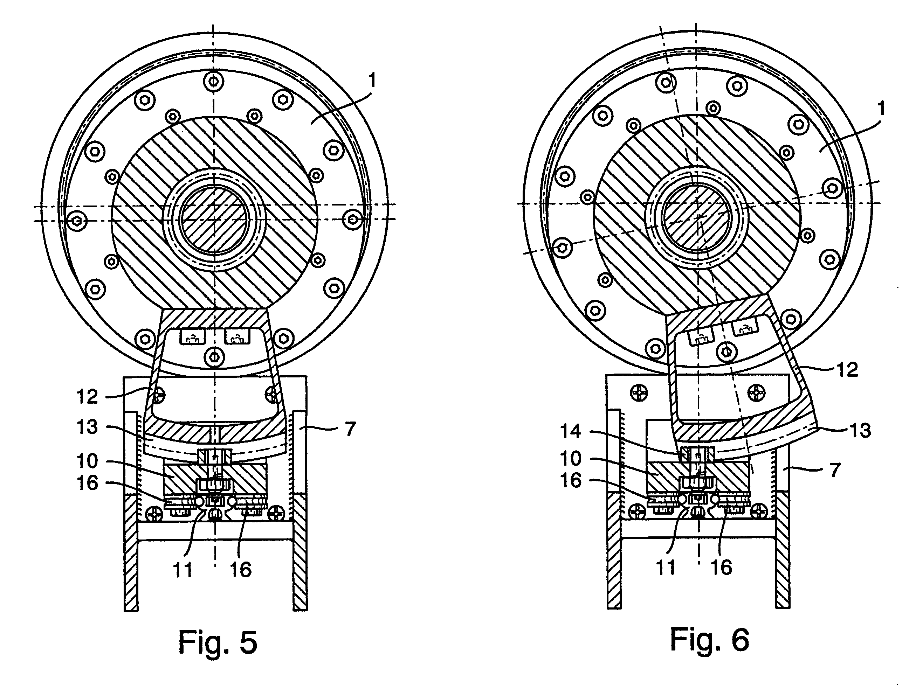

- Figur 5: den Schnitt gemäß Linie V-V der Figur 1;
- Figur 6: den Schnitt gemäß Figur 5, wobei jedoch der Zylinder und der daran befestigte Hebel in Umfangsrichtung verschwenkt sind.

### Ausführliche Beschreibung der Zeichnung

Ein Zylinder 1, beispielsweise ein Plattenzylinder, ist über zwei Exzenterlager 2 und 3 in zwei Gehäusewänden 4 und 5 eines Maschinengestells einer Druckmaschine drehbar gelagert. Die Exzenterlager 2 und 3 sind als Wälzlager ausgeführt und ermöglichen außer der Drehung des Zylinders 1 um seine Längsachse auch eine Verschiebung des Zylinders 1 in axialer Richtung. Für die Axialverstellung des Zylinders 1 ist ein elektrischer Stellmotor 6 vorgesehen, der auf einer an der Gehäusewand 4 angeschraubten Konsole 7 befestigt ist. Der Stellmotor verfügt über eine integrierte Haltebremse. Seine Läuferwelle 8 ist am abtriebsseitigen Ende als Gewindespindel eines Wälzschraubtriebes ausgeführt. Die Gewindemutter 9 dieses Wälzschraubtriebes ist an dem Laufwagen 10 einer Linearführung befestigt, deren Führungsschiene 11 ebenfalls von der Konsole 7 getragen wird.

Diese Linearführung als Teil der Verstellvorrichtung für die Axialverschiebung des Zylinders 1 kann Kräfte und Momente des Schraubgetriebes aufnehmen, welches von der Gewindemutter 9 und der Gewindespindel gebildet wird, die koaxial zu der Läuferwelle 8 angeordnet und mit dieser verbunden ist. Die Linearbewegung des Laufwagens 10 wird über einen Hebel 12 auf den Zylinder 1 übertragen. Der Hebel steht von dem Zylinder 1 radial ab und ist dort angeschraubt. An seinem von dem Zylinder 1 abgewandten Ende ist der Hebel 12 mit einem kreisbogenförmigen Flanschbereich 13 versehen, mit welchem er in den Zwischenraum ragt, der von zwei an dem Laufwagen 10 drehbar gelagerten Stützrollen 14 und 15 gebildet wird. Die Stützrollen sind in Achsrichtung des Zylinders 1 hintereinander angeordnet. Bei einer Verschiebung des Laufwagens 10 längs der Führungsschiene 11 zur Gehäusewand 4 hin drückt die Stützrolle 15 auf den Flanschbereich 13 des Hebels 12 und verschiebt über den Hebel den Zylinder 1 zur Gehäusewand 4 hin. Bei der Verschiebung des Laufwagens 10 in entgegengesetzter Richtung drückt die Stützrolle 14 den Flanschbereich 13 des Hebels 12 zurück, so daß der Zylinder 1 zu der anderen Gehäusewand 5 hin bewegt wird. Der Flanschbereich 13 ist zwischen beiden Stützrollen 14 und 15 spielfrei geklemmt. Infolge dieser Linearverschiebung des Laufwagens 10 kann der Zylinder 1 zwischen einer der Gehäusewand 4 nahen Endposition und einer von der Gehäusewand 4 entfernten Endposition bewegt werden.

Die Linearführung ist als Laufrollenführung mit vier Laufrollen 16 ausgeführt, die sich längs der Führungsschiene 11 abwälzen, wobei in Längsrichtung der Führungsschiene 11 zu deren beiden Seiten jeweils zwei Laufrollen 16 hintereinander angeordnet sind.

Die erfindungsgemäße Ausbildung ermöglicht es, den Zylinder 1 außer in Axialrichtung auch in Umfangsrichtung zu verstellen. Eine solche Drehbewegung ist zur Druckanstellung oder zur Druckentlastung des Zylinders 1 an seiner Umfangsfläche erforderlich. Da der Hebel 12 von den beiden Stützrollen 14 und 15 nur in axialer Richtung des Zylinders 1 geführt wird, kann er in seine in Umfangsrichtung des Zylinders 1 befindlichen Endpositionen der Druckanstellung bzw. Druckentlastung durchschwenken.

### Bezugszahlenliste

- 1: Zylinder
- 2: Exzenterlager
- 3: Exzenterlager
- 4: Gehäusewand
- 5: Gehäusewand
- 6: Stellmotor
- 7: Konsole
- 8: Läuferwelle
- 9: Gewindemutter
- 10: Laufwagen
- 11: Führungsschiene
- 12: Hebel
- 13: Flanschbereich
- 14: Stützrolle
- 15: Stützrolle
- 16: Laufrolle

## Patentansprüche

1. Lagerung für einen Zylinder (1) in einer Druckmaschine, der über einen Hebel (12) von einem ortsfest angeordneten elektrischen Stellmotor (6) in axialer Richtung verstellbar ist, **dadurch gekennzeichnet, dass** der Hebel (12) an dem Zylinder (1), von diesem radial abstehend, angeschraubt ist.

2. Lagerung nach Anspruch 1, **dadurch gekennzeichnet, daß** der Zylinder (1) an seinen beiden Enden mit jeweils einem die axiale Verstellung nicht behindernden Exzenterlager (2, 3) in Gehäusewänden (4, 5) eines Maschinengestells drehbar gelagert ist.

3. Lagerung nach Anspruch 1, **dadurch gekennzeichnet, daß** der Stellmotor (6) über eine Konsole (7) an einer der Gehäusewände (4, 5) befestigt ist.

4. Lagerung nach Anspruch 3, **dadurch gekennzeichnet, daß** die Konsole (7) für den Stellmotor (6) an der Gehäusewand (4) angeschraubt ist.

5. Lagerung nach Anspruch 1, **dadurch gekennzeichnet, daß** die Läuferwelle (8) des Stellmotors (6) am abtriebsseitigen Ende als Gewindespindel eines Wälzschraubtriebes ausgeführt ist, dessen Gewindemutter (9) an einem auf den Hebel (12) des Zylinders (1) einwirkenden Laufwagen (10) einer Linearführung angeordnet ist.

6. Lagerung nach Anspruch 5, **dadurch gekennzeichnet, daß** der Wälzschraubtrieb als Rollengewindetrieb ausgebildet ist.

7. Lagerung nach Anspruch 5, **dadurch gekennzeichnet, daß** die Linearführung als Laufrollenführung mit einer Führungsschiene (11) und vier an dem Laufwagen (10) gelagerten, längs der Führungsschiene (11) abrollbaren Laufrollen (16) ausgebildet ist.

8. Lagerung nach Anspruch 7, **dadurch gekennzeichnet, daß** an dem Laufwagen (10) in Längsrichtung der Führungsschiene (11) in einem Abstand hintereinander zwei Stützrollen (14, 15) gelagert sind, wobei ein kreisbogenförmiger Flanschbereich (13) des Hebels (12) des Zylinders (1) in dem Abstand zwischen den Stützrollen (14, 15) spielfrei eingeklemmt ist.

## Claims

1. Mounting for a cylinder (1) in a printing machine, which cylinder can be displaced in axial direction by a lever (12) of a stationary electric servomotor (6), **characterised in that** the lever (12) is screwed onto the cylinder (1) so as to project radially therefrom.

2. Mounting according to Claim 1 **characterised in that** the cylinder (1) is rotatably mounted at both its ends in housing walls (4, 5) of a machine frame through eccentric bearings (2, 3) that do not obstruct its axial displacement.

3. Mounting according to Claim 1, **characterised in that** the servomotor (6) is fixed through a bracket (7) on one of the housing walls (4, 5).

4. Mounting according to Claim 3, **characterised in that** the bracket (7) for the servomotor (6) is screwed on the housing wall (4).

5. Mounting according to Claim 1, **characterised in that** the rotor shaft (8) of the servomotor (6) is configured at its power take-off end as a threaded spindle of a rolling contact screw drive, the threaded nut (9) of which is arranged on a carriage (10) of a linear guide acting on the lever (12) of the cylinder (1).

6. Mounting according to Claim 5, **characterised in that** the rolling contact screw drive is configured as a roller screw drive.

7. Mounting according to Claim 5, **characterised in that** the linear guide is configured as a track roller guide having a guide rail (11) and four track rollers (16) that are mounted on the carriage (10) and can roll along the guide rail (11).

8. Mounting according to Claim 7, **characterised in that** two yoke-type track rollers (14, 15) spaced behind each other in the longitudinal direction of the guide rail (11) are mounted on the carriage (10), and a circular arc-shaped flange region (13) of the lever (12) of the cylinder (1) is clamped without play in the space between the yoke-type track rollers (14, 15).

## Revendications

1. Montage pour un cylindre (1) dans une machine à imprimer, ledit cylindre pouvant être déplacé en direction axiale par l'intermédiaire d'un levier (12) par un servomoteur électrique (6) stationnaire, **caractérisé en ce que** le levier (12) est vissé sur le cylindre (1) de façon à faire radialement saillie de celui-ci.

2. Montage selon la revendication 1, **caractérisé en ce que** le cylindre (1) est monté mobile en rotation à ses deux extrémités dans des parois de boîtier (4, 5) d'un bâti de machine par des paliers excentriques (2, 3) qui ne gênent pas le déplacement axial.

3. Montage selon la revendication 1, **caractérisé en ce que** le servomoteur (6) est fixé sur l'une des parois de boîtier (4, 5) par l'intermédiaire d'une console (7).

4. Montage selon la revendication 3, **caractérisé en ce que** la console (7) pour le servomoteur (6) est vissée sur la paroi de boîtier (4).

5. Montage selon la revendication 1, **caractérisé en ce que**, à son extrémité du côté sortie, l'arbre (8) du rotor du servomoteur (6) est configuré sous la forme d'une broche filetée d'une commande à vis à roulement dont l'écrou taraudé (9) est agencé sur un chariot (10) d'un guide linéaire agissant sur le levier (12) du cylindre (1).

6. Montage selon la revendication 5, **caractérisé en ce que** la commande à vis à roulement est configurée sous la forme d'une commande à vis à galets.

7. Montage selon la revendication 5, **caractérisé en ce que** le guide linéaire est configuré sous la forme d'un guide à galets de came ayant un rail de guidage (11) et quatre galets de came (16) qui sont montés sur le chariot (10) et qui peuvent rouler le long du rail de guidage (11).

8. Montage selon la revendication 7, **caractérisé en ce que** deux galets de came pour étrier (14, 15) sont montés sur le chariot (10) à l'écart, l'un derrière l'autre, selon la direction longitudinale du rail de guidage (11), et une région de bride (13) en arc de cercle appartenant au levier (12) du cylindre (1) est serrée sans jeu dans l'espace entre les galets de came pour étrier (14, 15).
